# EUROPÄISCHE PATENTSCHRIFT

(11) **EP 3 515 790 B1**
(45) Veröffentlichungstag und Bekanntmachung des Hinweises auf die Patenterteilung: **09.09.2020**
(21) Anmeldenummer: 17778207.5
(22) Anmeldetag: 18.09.2017
(51) Int. Cl.: B62D 1/184

(54) **MANTELEINHEIT FÜR EINE VERSTELLBARE LENKSÄULE EINES KRAFTFAHRZEUGS**
SLEEVE UNIT FOR AN ADJUSTABLE STEERING COLUMN OF A MOTOR VEHICLE
ENSEMBLE JUPE CONÇU POUR UNE COLONNE DE DIRECTION RÉGLABLE D'UN VÉHICULE AUTOMOBILE

(30) Priorität: 22.09.2016 DE 102016218271
(43) Veröffentlichungstag der Anmeldung: 31.07.2019
(73) Patentinhaber: thyssenkrupp Presta AG, 9492 Eschen (LI); thyssenkrupp AG, 45143 Essen (DE)
(72) Erfinder: GALEHR, Robert, 9486 Schaanwald (LI); DOMIG, Markus, 6781 Bartholomäberg (AT)
(74) Vertreter: thyssenkrupp Intellectual Property GmbH
(86) Internationale Anmeldenummer: PCT/EP2017/073417
(87) Internationale Veröffentlichungsnummer: WO 2018/054815

(56) Entgegenhaltungen:
- EP-A1- 0 443 910
- EP-A2- 0 335 397
- EP-A2- 0 497 262
- EP-A2- 1 529 714
- DE-A1-102006 039 476
- GB-A- 2 116 496
- US-A1- 2013 213 174

## Beschreibung

Die Erfindung betrifft eine Manteleinheit für eine verstellbare Lenksäule eines Kraftfahrzeugs, die an einem Fahrzeugchassis anbringbar ist und zur längsverschieblichen Aufnahme eines Mantelrohrs vorgesehen ist, das zur drehbaren Lagerung einer Lenkwelle um eine Drehachse bestimmt ist, wobei die Manteleinheit einen das Mantelrohr umgreifenden Klemmabschnitt aufweist, mittels dessen das Mantelrohr in der Manteleinheit festklemmbar ist, wobei der Klemmabschnitt mindestens eine Kontaktplatte mit einer zentralen Ausnehmung aufweist, deren Plattenebene orthogonal zur Drehachse der Lenkwelle angeordnet ist und welche das Mantelrohr in ihrer zentralen Ausnehmung aufnimmt, so dass das Mantelrohr in der Kontaktplatte festklemmbar ist.

Weiterhin betrifft die Erfindung eine Lenksäule für ein Kraftfahrzeug.

Eine derartige Manteleinheit ist aus der DE 10 2014 016 510 A1 bekannt. Diese bekannte Manteleinheit ist als Gussbauteil ausgebildet. Nachteil dieser Lösung ist, dass eine Gussmanteleinheit kostenintensiv ist und zerspanende Arbeitsschritte notwendig sind, um die Funktionsflächen auszubilden. Die DE 10 2007 002 091 A1 offenbart eine Lenksäule mit einer Manteleinheit, die als Blechbauteil ausgebildet ist. Nachteil dieser Lösung ist es, dass die Klemmung des Mantelrohrs ungenügend ist, da die Manteleinheit nachgiebige Klemmabschnitte aufweist.

Aus der EP 1 529 714 A2 ist eine Manteleinheit für eine Lenksäule der eingangs genannten Art bekannt. Die Ausnehmung in der Kontaktplatte weist jedoch keine eindeutig definierte Kontaktfläche auf, so dass die Klemmung unzureichend sein kann.

Aufgabe der Erfindung ist es, eine verbesserte Manteleinheit für eine Lenksäule anzugeben, die kostengünstig herstellbar ist und ein sicheres Einklemmen des Mantelrohrs gewährleistet.

Gelöst wird die Aufgabe durch die Merkmale des Patentanspruchs 1 und 10. Vorteilhafte Weiterbildungen ergeben sich aus den Unteransprüchen.

Erfindungsgemäß wird vorgeschlagen, dass die zentrale Ausnehmung einer Kontaktplatte drei oder vier kreissegmentförmige Abschnitte aufweist, die in Umfangsrichtung zueinander beabstandet sind, und dass die radial nach innen dem Mantelrohr zugewandten und zum Festklemmen des Mantelrohrs bestimmten Kontaktflächen der Abschnitte als Schnittkanten ausgebildet sind.

Überraschenderweise klemmen unbearbeitete Kontaktflächen mit geringem Glattschnittanteil das Mantelrohr dennoch sehr gut ein, ohne dass die Kontaktflächen mit geringem Glattschnittanteil das Mantelrohr beschädigen würden.

Überraschenderweise hat sich gezeigt, dass eine ausreichende Klemmung des Mantelrohrs durch die schmalen inneren Kontaktflächen der Kontaktplatte gewährleistet ist. Die erfindungsgemäße Manteleinheit kann somit einfach, kostengünstig und leicht ausgestaltet werden. Bevorzugt ist die Kontaktplatte als Stanzteil ausgebildet. Es zeigte sich in überraschender Weise, dass auch Kontaktflächen mit einem geringen Glattschnittanteil eine sichere und ausreichend feste Klemmung mit dem Mantelrohr gewährleistet. Die Herstellung durch Stanzen ist besonders einfach, insbesondere wenn die Kontaktplatten nicht nachbearbeitet werden müssen. Beim Stanzen sind keine besonders engen Toleranzen einzuhalten, was die Herstellung ebenfalls vereinfacht. Außerdem ist die Steifigkeit in Zuspannrichtung nur in geringem Maß abhängig von der Stärke der Kontaktplatten.

Alternativ ist es ebenfalls denkbar und möglich, die Kontaktplatten mittels Laserschneiden oder Wasserstrahlschneiden aus einem Blechhalbzeug zu bilden.

In einer vorteilhaften Weiterbildung kann es vorgesehen sein, dass die Manteleinheit verschwenkbar an dem Fahrzeugchassis direkt oder indirekt anbringbar ist. Durch eine solche Verschwenkbarkeit lässt sich eine Höhenverstellung der Manteleinheit realisieren.

In einer bevorzugten Ausführungsform der Erfindung weist der Klemmabschnitt zwei Kontaktplatten auf, die im axialen Abstand zueinander angeordnet und mit einem Verbindungsblech verbunden sind. Bevorzugt kann das Verbindungsblech als Stanz-Biegeteil ausgestaltet sein. Zwei Kontaktplatten können das Mantelrohr sicherer festklemmen und in einer vorgegebenen Position halten als eine einzige Kontaktplatte. Dabei wird die exakte Position des Mantelrohrs durch den relativ großen axialen Abstand der Kontaktplatten zueinander gewährleistet. Das Verbindungsblech kann auch mehrteilig, insbesondere zweiteilig ausgestaltet sein. Es kann auf einfache und kostengünstige Weise mittels eines Stanz-Prägevorgangs und in wenigen Biegevorgängen hergestellt werden.

Der axiale Abstand, d.h. der Abstand gemessen in Richtung der Drehachse, weist bevorzugt einen Wert zwischen 30mm und 80mm auf.

In einer vorteilhaften Ausgestaltung sind die Kontaktplatten mit dem Verbindungsblech verschweißt, vorzugsweise durch Laserschweißen. Auch dieser Arbeitsschritt ist ohne besonderen Aufwand und kostengünstig ausführbar.

Vorzugsweise umschließt das Verbindungsblech das Mantelrohr U-förmig, wobei zwei gegenüberliegende Endbereiche jeweils eine Durchgangsöffnung zum Durchgang eines Klemmbolzens einer Zuspannvorrichtung aufweisen. Durch diese Maßnahme kann die erfindungsgemäße Manteleinheit mit einer bekannten und üblichen Zuspannvorrichtung mit Klemmbolzen versehen werden, mit der die Manteleinheit zusammengedrückt werden kann, damit sie das Mantelrohr mithilfe ihrer Kontaktplatten festklemmt.

Die Zuspannvorrichtung umfasst bevorzugt eine erste Hubscheibe und eine zweite Hubscheibe. Die erste Hubscheibe ist bevorzugt als Nockenscheibe ausgebildet und umfasst zumindest einen Nockenabschnitt, der mit einer Kurvengeometrie der zweiten Hubscheibe zur Bereitstellung eines Klemmhubs in Richtung der Achse des Klemmbolzens zusammenwirkt. Zusätzlich können Wälzkörper vorgesehen sein, die zwischen der ersten und zweiten Hubscheibe angeordnet sind. Alternativ zu einem Nockenabschnitt und einer Kurvengeometrie der Hubscheiben, kann zwischen der ersten Hubscheibe und der zweiten Hubscheibe Kippstifte vorgesehen sein, die durch die Verdrehung der ersten Hubscheib gegenüber der zweiten Hubscheibe in die Strecklage bewegt werden und somit einen Klemmhub bereitstellen.

Damit sich die Manteleinheit unter starken Zuspannkräften der Zuspannvorrichtung möglichst wenig verformt, ist mit Vorteil vorgesehen, dass das Verbindungsblech mit Verstärkungssicken versehen ist, die in Höhe der jeweiligen Durchgangsöffnung angeordnet und axial ausgerichtet sind.

Bevorzugt können die Verstärkungssicken so ausgebildet sein, dass diese mit einer Klemmbacke eines karosseriefesten Halters in Kontakt bringbar ist. Dadurch kann eine verbesserte Abstützung der Manteleinheit in dem Halter erreicht werden. Weiterhin kann man durch diese Kontakte zwischen dem Halter und der Manteleinheit eine verbesserte Eigenfrequenz der Lenksäule erzielen.

In vorteilhafter Ausgestaltung der erfindungsgemäßen Manteleinheit ist vorgesehen, dass die Kontaktplatten jeweils eine radiale Durchbrechung aufweisen, die einen Spalt bilden, der durch Zuspannen des Klemmabschnitts mittels der Zuspannvorrichtung verkleinert werden kann, um so das Mantelrohr in der zentralen Ausnehmung der jeweiligen Kontaktplatte festzuklemmen. Somit wirkt jede der Kontaktplatten wie eine Klemmschelle.

Eine vorteilhafte Ausführungsform sieht vor, dass die Kontaktplatten mittels Feinschneiden aus einer Platine gestanzt sind.

Um das Gleiten des Mantelrohrs in Richtung seiner Längsachse bei nicht zugespannter Zuspannvorrichtung zu erleichtern, wird vorgeschlagen, dass die Kontaktflächen der Kontaktplatten mit Gleitlack oder mit Gleitplättchen aus Messing oder Kunststoff versehen sind.

Besonders bevorzugt weist die Kontaktplatte ein Dicke (Materialstärke) mit einem Wert kleiner als 10 mm auf, besonders bevorzugt ist der Wert kleiner als 5 mm. Es zeigte sich, dass auch mit relativ dünnen Kontaktplatten eine ausreichend gute Klemmung des Mantelrohrs realisiert werden kann. Obwohl die Flächenpressungen im festgeklemmten Zustand im Vergleich zu Manteleinheiten, die aus dem Stand der Technik bekannt sind, relativ hoch sind, treten keine störenden Beschädigungen auf der Oberfläche des Mantelrohrs auf. Die wirkenden hohen Flächenpressungen bringen sogar den Vorteil mit sich, dass es zur Abflachung der Unebenheiten der Kontaktflächen der Kontaktplatte kommt, die aus dem geringen Glattschnittanteil resultieren können.

Die erfindungsgemäße Manteleinheit kann mit Vorteil weiter verbessert werden, wenn sie einen Halteabschnitt aufweist, der mit dem Fahrzeug verbindbar ist und sich bei einer Verschwenkung der Manteleinheit elastisch verformen kann. Hierdurch wird die Verschwenkbarkeit der Manteleinheit gewährleistet, die für eine Höhenverstellung der Lenksäule erforderlich ist.

Weiterhin wird eine Lenksäule für ein Kraftfahrzeug vorgeschlagen, umfassend eine Lenkwelle, die in einem Mantelrohr um eine Drehachse drehbar aufgenommen ist, wobei das Mantelrohr in einer Manteleinheit gemäß einer der vorangehend beschriebenen Ausführungen verschiebbar in Richtung der Drehachse aufgenommen ist

Ein Ausführungsbeispiel der Erfindung wird nachfolgend anhand der Zeichnungen näher erläutert. Die Figuren zeigen im Einzelnen:
- Fig. 1:: in perspektivischer Ansicht eine Lenksäule für ein Kraftfahrzeug in einbaufertigem Zustand mit erfindungsgemäßer Manteleinheit;
- Figur 2:: die Lenksäule von Figur 1 mit demontierter Zuspannvorrichtung;
- Figur 3:: eine Draufsicht auf die dem Fahrer zugewandten Seite der Lenksäule mit erfindungsgemäßer Manteleinheit;
- Figur 4:: eine erfindungsgemäße Manteleinheit in perspektivischer Darstellung;
- Figur 5:: eine Draufsicht auf die hintere Schmalseite der erfindungsgemäßen Manteleinheit;
- Figur 6:: eine erfindungsgemäße Manteleinheit in einer Spreng-Darstellung.

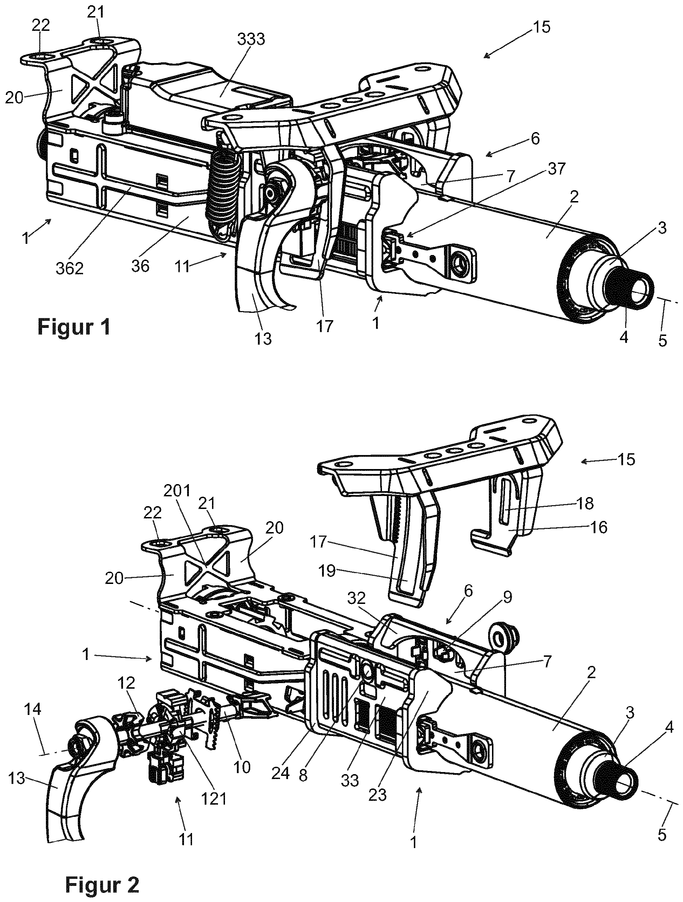

In den Figuren 1-3 erkennt man eine erfindungsgemäße Manteleinheit 1, die ein Mantelrohr 2 aufnimmt. Im Mantelrohr 2 ist eine Lenkwelle 3 drehbar gelagert. An einem Endbereich 4 der Lenkwelle 3 kann ein nicht gezeigtes Lenkrad befestigt werden. Um das Lenkrad in Richtung der Drehachse 5 der Lenkwelle 3 verschiebbar zu machen, ist das Mantelrohr 2 in der Manteleinheit 1 längsverschieblich angeordnet. Um das Mantelrohr 2 nach dem Verstellen zu fixieren, besitzt die Manteleinheit 1 einen Klemmabschnitt 6. Der Klemmabschnitt 6 umschließt das Mantelrohr 2 mit Ausnahme eines Längsspaltes 7 auf ihrer Oberseite. Der Klemmabschnitt 6 weist zwei gegenüberliegende Durchgangsöffnungen 8, 9 auf, durch die ein Klemmbolzen 10 einer Zuspannvorrichtung 11 hindurch ragt. Die Zuspannvorrichtung 11 ist mit einer ersten Hubscheibe 12 versehen, die mit einem Bedienhebel 13 zusammenwirkt.

Wird der Bedienhebel 13 um die Achse 14 des Klemmbolzens 10 verschwenkt, so fahren zwei Hubscheiben 12, 121 in Richtung der Achse 14 auseinander, wobei der Klemmabschnitt 6 über den Klemmbolzen 10 zusammengezogen wird, so dass sich der Längsspalt 7verkleinert und schließlich das Mantelrohr 2 in der Klemmabschnitt 6 eingeklemmt und damit fixiert wird, so dass eine Verschiebung des Mantelrohrs 2 in Richtung der Drehachse 5 der Lenkwelle 2 im Normalbetriebszustand der Lenksäule nicht mehr möglich ist. Die Hubscheibe 12 weist eine Nockenkontur auf, die mit einer Kurvengeometrie der Hubscheibe 121 zusammenwirkt, wobei bei einer Verdrehung des Bedienhebels 13 um die Achse 14 sich die Hubscheibe 12 gegenüber der Hubscheibe 121 verdreht. Durch dieses Verdrehen der Hubscheiben 12, 121 zueinander, wird ein Klemmhub in Richtung der Achse 14 bereitgestellt, der das Mantelrohr 2 und die Manteleinheit 1 miteinander verspannt.

Außerdem wirkt die Zuspannvorrichtung 11 mit einem Halter 15 zusammen, der mit dem nicht gezeigten Fahrzeug fest verbindbar ist. Der Halter 15 besitzt zwei Klemmbacken 16, 17, die nach unten ragen und jeweils mit einem Längsschlitz 18, 19 versehen sind. Dies erkennt man am besten in Figur 2. In dem in Figur 1 gezeigten eingebauten Zustand ragt der Klemmbolzen 10 der Zuspannvorrichtung 11 auch durch die beiden Längsschlitze 18, 19 der Klemmbacken 16, 17 des Halters 15. Aufgrund der Ausdehnung der Längsschlitze 18, 19 kann der Klemmbolzen 10 über einen gewissen Bereich nach oben oder nach unten geschoben werden. Da der Klemmbolzen 10 auch in den Durchgangsöffnungen 8, 9 des Klemmabschnitts 6 steckt, wird zusammen mit dem Klemmbolzen 10 auch der Klemmabschnitt 6 nach oben oder nach unten bewegt.

Die Manteleinheit 1 ist an ihrem vorderen Ende mit einem Halteabschnitt 20 versehen, der als Blechstanzsteil ausgestaltet ist. Der Halteabschnitt 20 weist zwei Befestigungsöffnungen 21, 22 auf, die zum Durchgang von nicht gezeigten Befestigungsschrauben bestimmt sind, mit denen der Halteabschnitt 20 an der nicht gezeigten Karosserie des Fahrzeugs befestigbar ist. Da das Blech des Halteabschnitts 20 elastisch ist, kann die Manteleinheit 1 innerhalb der durch die Längsschlitze 18, 19 der Klemmbacken 17 begrenzten Bereich nach oben oder unten bewegt werden, wobei die Manteleinheit 1 verschwenkt und der Halteabschnitt 20 elastisch verformt wird. Der Halteabschnitt 20 umfasst ein Strebenkreuz 201, welches eine elastische Verformung des Halteabschnitts 20 zur Verschwenkung der Manteleinheit 1 gewährleistet, jedoch in andere Verformungsrichtungen eine höhere Steifigkeit bereitstellt. Diese Verschwenkung der Manteleinheit 1 bewirkt eine Höhenverstellung des nicht gezeigten Lenkrades.

Soll die Lenksäule in einer vorgewählten Höhe fixiert werden, so wird dies durch dieselbe Zuspannvorrichtung 11 bewirkt, die auch das Mantelrohr 2 gegen unbeabsichtigte Verschiebungen in Richtung der Drehachse 5 der Lenkwelle 3 fixiert. Wird der Bedienhebel 13 in Zuspannvorrichtung geschwenkt, so klemmt die Zuspannvorrichtung 11 die Manteleinheit 1 an den Klemmbacken 16, 17 fest, so dass eine unbeabsichtigte Bewegung der Lenksäule nach oben oder unten verhindert wird.

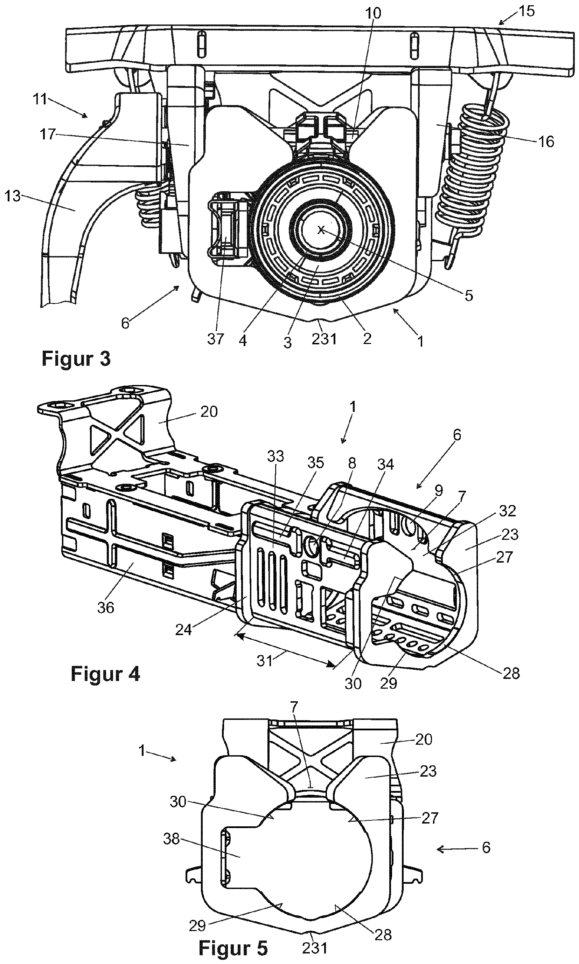

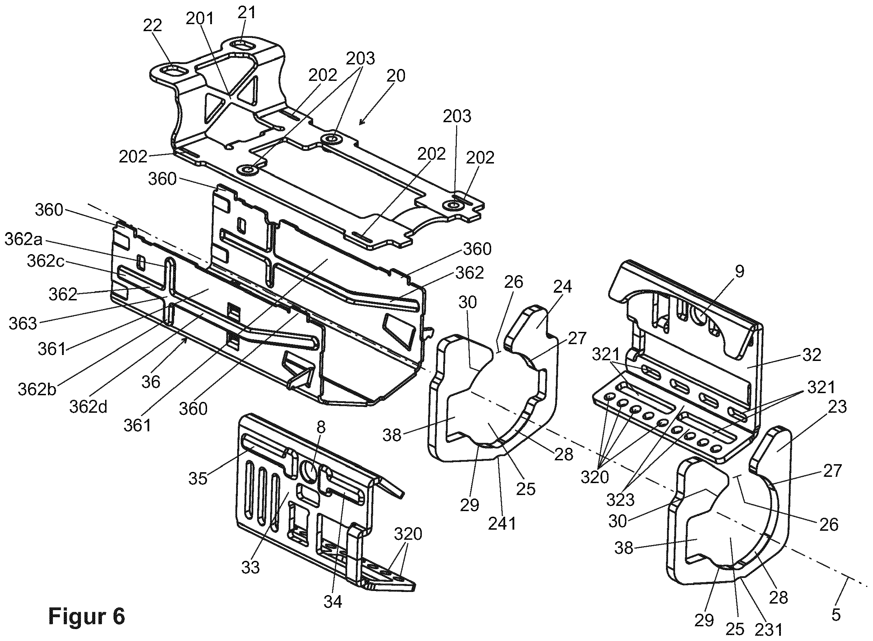

Die Figuren 4-6 zeigen im Detail den Aufbau der Manteleinheit 1. Der Klemmabschnitt 6 weist zwei Kontaktplatten 23, 24 auf, die jeweils mit einer zentralen Ausnehmung 25 für den Durchgang des Mantelrohrs 2 ausgestattet sind. Dabei ist die Plattenebene orthogonal zur Drehachse 5 der Lenkwelle 3 ausgerichtet. Das in den Ausnehmungen 25 aufgenommene Mantelrohr 2 kann in den Kontaktplatten 23, 24 festgeklemmt werden. Hierfür ist eine radiale Durchbrechung 26 der Kontaktplatten von Bedeutung, welche einen Spalt bildet, der durch Zuspannen des Klemmabschnitts 6 verkleinert werden kann, bis die Kontaktplatten 23, 34 das Mantelrohr 2 festklemmen. In Kontakt mit dem Mantelrohr 2 kommen dabei vier kreissegmentförmige Abschnitte 27, 28, 29, 30 auf der Innenseite der Kontaktplatten 23, 24, die in Umfangsrichtung im Abstand zueinander angeordnet sind und vier Kontaktflächen 27, 28, 29, 30 bilden, die im zugespannten Zustand der Zuspannvorrichtung 11 an die Außenfläche des Mantelrohrs 2 angepresst werden, um das Mantelrohr 2 zu fixieren. Die Kontaktflächen 27, 28, 29, 30 sind als Schnittkanten ausgebildet, die beim Ausstanzen der Kontaktplatten 23, 24 entstehen. Vorzugsweise werden die Kontaktplatten 23, 24 durch Feinschneiden aus einer Metallplatine gestanzt. Im einfachsten Fall ist keine Nachbearbeitung der Kontaktflächen 27, 28, 29, 30 erforderlich um eine feste Klemmverbindung mit dem Mantelrohr 2 zu gewährleisten. Gegebenenfalls können die ausgestanzten Kanten der Kontaktplatten 23, 24 jeweils mit einer Fase versehen werden. Beispielsweise kann diese Fase durch den Stanzeinzug und/oder durch den Stanzausbruch gebildet werden. Weiterhin kann es vorgesehen sein, dass die Kontaktplatte 23, 24 trowalisiert (gleitgeschliffen) ist. Dies verbessert das Crashverhalten, da das in der Manteleinheit 1 festgeklemmte Mantelrohr 2 im Crashfall besser in die Manteleinheit hineingleiten kann, da die Kanten der Kontaktplatten 23, 24 gebrochen sind. Mit anderen Worten sind die Kanten der Kontaktplatten 23, 24 nicht scharfkantig ausgebildet, so dass es zu einer verringerten Abrasion zwischen den Kontaktflächen 27, 28, 29, 30 der Manteleinheit 1 und des Mantelrohrs 2 kommt.

Um ein besseres Gleiten des Mantelrohrs 2 zu gewährleisten, wenn der Klemmabschnitt 6 für eine Verstellung der Lenksäule gelöst wurde, können die Abschnitte der Kontaktflächen 27, 28, 29, 30 mit Gleitlack versehen werden. Alternativ können auch Gleitplättchen aus Messing oder Kunststoff eingeklebt werden.

Bei dem hier erläuterten Ausführungsbeispiel weist der Klemmabschnitt 6 zwei Kontaktplatten 23, 24 auf, die im axialen Abstand 31 zueinander angeordnet sind. Die beiden Kontaktplatten 23, 24 sind mit einem zweiteiligen Verbindungsblech 32, 33 verbunden. Die beiden Teile des Verbindungsblechs 32, 33 sind als Stanz-Biegeteile ausgestaltet und mit den Kontaktplatten 23, 24 mittels Laserschweißen verschweißt. Die Verbindungsbleche 32, 33 umschließen zusammen mit den Kontaktplatten 23, 24 das Mantelrohr 2 im wesentlichen U-förmig, also nicht vollständig, wobei an der Oberseite ein Längsspalt 7 verbleibt, dessen Breite durch Zuspannen der Zuspannvorrichtung 11 verkleinert werden kann, um das Mantelrohr 2 in dem Klemmabschnitt 6 einzuklemmen. Die Kontaktplatten 23, 24 weisen jeweils eine Einkerbung 231, 241 auf, die auf der gegenüberliegenden Seite der Durchbrechung 26 angeordnet ist. Über die Form und Ausgestaltung der Einkerbungen 231, 241 lässt sich die Steifigkeit der Kontaktplatten 23, 24 in Richtung der Achse 14 des Klemmbolzens 10 bestimmen. Dadurch lässt sich die Kraft, die erforderlich ist, um die Breite des Längsspalts 7 beim Zuspannen der Zuspannvorrichtung 11 zu verkleinern, festlegen und somit die zwischen den Kontaktplatten 23, 24 und dem Mantelrohr 2 wirkende Klemmkraft beeinflussen. Die Verbindungsbleche 32, 33 haben zum Durchgang des Klemmbolzens 10 der Zuspannvorrichtung 11 jeweils eine Durchgangsöffnung 8, 9. In Höhe der Durchgangsöffnungen 8, 9 ist das jeweilige Verbindungsblech 32, 33 mit Verstärkungssicken 34, 35 versehen, die sich parallel zur Drehachse 5 erstrecken. Dadurch werden die Verbindungsbleche 32, 33 steifer und biegen sich weniger durch, wenn die Kraft der Zuspannvorrichtung 11 auf sie einwirkt. Weiterhin umfassen die Verbindungsbleche 32, 33 Durchgangslöcher zur Massenreduktion, die als kreiszylindrisches Durchgangsloch 320 und als Langloch 321 ausgebildet sind. Um eine Kraftübertragung zwischen den Kontaktplatten 23, 24 in Richtung der Drehachse 5 zu gewährleisten, sind die Durchganglöcher 320, 321 in den Verbindungsblechen 32, 33 so angeordnet, dass die Verbindungsbleche 32, 33 Stege 323 aufweisen, die sich in Richtung der Drehachse 5 durchgehend erstrecken. Somit kann eine Kraft in Richtung der Drehachse 5 direkt von der Kontaktplatte 23 durch die Stege 323 der Verbindungsbleche 32, 33 hindurch auf die Kontaktplatte 24 übertragen werden, ohne das es zu einer ungewollten Verformung der Verbindungsbleche 32, 33 kommt.

Der Klemmabschnitt 6 ist an ihrer vorderen Stirnseite mit einem kastenförmigem U-Profil 36 verschweißt, auf dessen Oberseite der Halteabschnitt 20 befestigt ist. Der Halteabschnitt 20 umfasst Öffnungen 202, in die Zapfen 360 des kastenförmigen U-Profils 36 hineinragen. Die Zapfen 360 stützen sich in Richtung der Drehachse 5 formschlüssig an dem Rand der jeweiligen Öffnung 202 ab. Weiterhin umfasst der Halteabschnitt 20 Gewindebohrungen 203, welche zur Anbringung eines in Figur 1 erkennbaren elektro-mechanischen Lenkradschloss 333, auch elektrische Lenkradverriegelung genannt, an der Manteleinheit 1 vorgesehen ist. Das kastenförmige U-Profil 36 umfasst zwei Schenkelabschnitte 361, die sich parallel zueinander erstrecken und an deren freien Enden die Zapfen 360 ausgebildet sind. Jeder der Schenkelabschnitte 361 umfasst eine Steifigkeitssicke 362, wobei die Steifigkeitssicke 362 vier Sickenabschnitte 362a, 362b, 362c und 362d aufweist, die sich in einem gemeinsamen Punkt 363 treffen. Zwei der Sickenabschnitte 362a, 362b erstrecken sich orthogonal zur Drehachse 5 der Lenkwelle 3 und die anderen zwei Sickenabschnitte 362c, 362d erstrecken sich in der Nähe des gemeinsamen Punktes 363 in Richtung der Drehachse 5 der Lenkwelle 5. Der gemeinsame Punkt 363 und die in Richtung der Drehachse 5 orientierten Sickenabschnitte 362c, 362d sind bevorzugt auf der Höhe der Drehachse 5 angeordnet. Durch diese Ausbildung der Steifigkeitssicken 362 ist es möglich, auch mit einer geringen Materialstärke des U-Profils 36 eine verwindungssteife und robuste Manteleinheit 1 bereitzustellen.

Außerdem kann die Lenksäule mit einer hier nicht näher beschriebenen Energieabsorptionsvorrichtung 37 versehen werden, die sowohl mit der Manteleinheit 1 als auch mit dem Mantelrohr 2 verbunden ist und im Crashfall beim Auftreten besonders starker Kräfte eine Verschiebung des Mantelrohrs 2 gegenüber der Manteleinheit 1 unter Absorption der hierfür aufzuwendenden Energie ermöglicht. Um Raum für die Unterbringung der Energieabsorptionsvorrichtung 37 zu schaffen, sind die Kontaktplatten 23, 24 jeweils mit einer seitlichen Ausbuchtung 38 versehen, die am Innenumfang der Durchbrechung 26 zwischen zwei Kontaktflächen 29, 30 angeordnet ist und sich radial nach außen erstreckt.

Durch die erfindungsgemäße Ausgestaltung der Kontaktplatten 23, 24 kann die Manteleinheit 1 ohne Funktionseinbußen auf einfachere Weise mittels einfacher und kostengünstiger Fertigungsverfahren wie Stanzen, mit höheren Toleranzen und somit wesentlich kostengünstiger hergestellt werden.

### Bezugszeichen

- 1.: Manteleinheit
- 2.: Mantelrohr
- 3.: Lenkwelle
- 4.: Endbereich
- 5.: Drehachse
- 6.: Klemmabschnitt
- 7.: Längsspalt
- 8.: Durchgangsöffnung
- 9.: Durchgangsöffnung
- 10.: Klemmbolzen
- 11.: Zuspannvorrichtung
- 12.: Kugelrampe
- 13.: Bedienhebel
- 14.: Achse
- 15.: Halter
- 16.: Klemmbacken
- 17.: Klemmbacken
- 18.: Längsschlitz
- 19.: Längsschlitz
- 20.: Halteabschnitt
- 21.: Befestigungsöffnung
- 22.: Befestigungsöffnung
- 23.: Kontaktplatte
- 24.: Kontaktplatte
- 25.: Ausnehmung
- 26.: Durchbrechung
- 27.: Abschnitt / Kontaktfläche
- 28.: Abschnitt / Kontaktfläche
- 29.: Abschnitt / Kontaktfläche
- 30:: Abschnitt / Kontaktfläche
- 31.: Abstand
- 32.: erstes Verbindungsblech
- 33.: zweites Verbindungsblech
- 34.: Verstärkungssicke
- 35.: Verstärkungssicke
- 36.: U-Profil
- 37.: Energieabsorptionsvorrichtung
- 38.: Ausbuchtung

## Patentansprüche

1. Manteleinheit für eine verstellbare Lenksäule eines Kraftfahrzeugs, die an einem Fahrzeugchassis anbringbar ist und zur längsverschieblichen Aufnahme eines Mantelrohrs (2) vorgesehen ist, das zur drehbaren Lagerung einer Lenkwelle (3) um eine Drehachse (5) bestimmt ist, wobei die Manteleinheit (1) einen das Mantelrohr (2) umgreifenden Klemmabschnitt (6) aufweist, mittels dessen das Mantelrohr (2) in der Manteleinheit (1) festklemmbar ist, wobei der Klemmabschnitt (6) mindestens eine Kontaktplatte (23, 24) mit einer zentralen Ausnehmung (25) aufweist, deren Plattenebene orthogonal zur Drehachse (5) der Lenkwelle (3) angeordnet ist und welche das Mantelrohr (2) in ihrer zentralen Ausnehmung (25) aufnimmt, so dass das Mantelrohr (2) in der Kontaktplatte (23, 24) festklemmbar ist, **dadurch gekennzeichnet, dass** die zentrale Ausnehmung (25) einer Kontaktplatte (23, 24) drei oder vier kreissegmentförmige Abschnitte (27, 28, 29, 30) aufweist, die in Umfangsrichtung zueinander beabstandet sind, und dass die radial nach innen dem Mantelrohr (2) zugewandten und zum Festklemmen des Mantelrohrs (2) bestimmten Kontaktflächen der Abschnitte (27, 28, 29, 30) als Schnittkanten ausgebildet sind.

2. Manteleinheit nach Anspruch 1, **dadurch gekennzeichnet, dass** der Klemmabschnitt (6) zwei Kontaktplatten (23, 24) aufweist, die im axialen Abstand (31) zueinander angeordnet und mit mindestens einem Verbindungsblech (32, 33) verbunden sind.

3. Manteleinheit nach Anspruch 2, **dadurch gekennzeichnet, dass** die Kontaktplatten (23, 24) mit dem Verbindungsblech (32, 33) verschweißt sind.

4. Manteleinheit nach Anspruch 2 oder 3, **dadurch gekennzeichnet, dass** das Verbindungsblech (32, 33) das Mantelrohr (2) U-förmig umschließt und zwei gegenüberliegende Endbereiche jeweils eine Durchgangsöffnung (8, 9) zum Durchgang eines Klemmbolzens (10) einer Zuspannvorrichtung (11) aufweisen.

5. Manteleinheit nach Anspruch 4, **dadurch gekennzeichnet, dass** das Verbindungsblech (32, 33) mit Verstärkungssicken (34, 35) versehen ist, die in Höhe der jeweiligen Durchgangsöffnung (8, 9) angeordnet und in Richtung der Drehachse (5) ausgerichtet sind.

6. Manteleinheit nach einem der Ansprüche 2 bis 5, **dadurch gekennzeichnet, dass** die Kontaktplatten (23, 24) jeweils eine radiale Durchbrechung 26 aufweisen, die einen Spalt bildet, der durch Zuspannen des Klemmabschnitts (6) mittels einer Zuspannvorrichtung (11) verkleinert werden kann, um so das Mantelrohr (2) in der zentralen Ausnehmung (25) der jeweiligen Kontaktplatte (23, 24) festzuklemmen.

7. Manteleinheit nach Anspruch 1, **dadurch gekennzeichnet, dass** die Kontaktplatten (23, 24) mittels Feinschneiden aus einer Platine gestanzt sind.

8. Manteleinheit nach Anspruch 1 , **dadurch gekennzeichnet, dass** die Kontaktflächen (27, 28, 29, 30) der Kontaktplatten (23, 24) mit Gleitlack oder mit Gleitblättchen aus Messing oder Kunststoff versehen sind.

9. Manteleinheit nach einem der vorhergehenden Ansprüche, **dadurch gekennzeichnet, dass** sie einen Halteabschnitt (20) aufweist, der mit dem Fahrzeug verbindbar ist und sich bei einer Verschwenkung der Manteleinheit (1) elastisch verformen kann.

10. Lenksäule für ein Kraftfahrzeug, umfassend eine Lenkwelle (3), die in einem Mantelrohr (2) um eine Drehachse (5) drehbar aufgenommen ist, wobei das Mantelrohr (2) in einer Manteleinheit (1) nach einem der Ansprüche 1 bis 9 verschiebbar in Richtung der Drehachse (5) aufgenommen ist.

## Claims

1. Casing unit for an adjustable steering column of a motor vehicle, which casing unit can be attached to a vehicle chassis and is provided for receiving a steering column tube (2) in a longitudinally displaceable manner, which steering column tube (2) is intended for rotatably mounting a steering shaft (3) about a rotational axis (5), the casing unit (1) having a clamping section (6) which engages around the steering column tube (2) and by means of which the steering column tube (2) can be clamped fixedly in the casing unit (1), the clamping section (6) having at least one contact plate (23, 24) with a central recess (25), the plate plane of which contact plate (23, 24) is arranged orthogonally with respect to the rotational axis (5) of the steering shaft (3), and which contact plate (23, 24) receives the steering column tube (2) in its central recess (25), with the result that the steering column tube (2) can be clamped fixedly in the contact plate (23, 24), **characterized in that** the central recess (25) of a contact plate (23, 24) has three or four circular segment-shaped sections (27, 28, 29, 30) which are spaced apart from one another in the circumferential direction, and **in that** the contact faces of the sections (27, 28, 29, 30), which contact faces face the steering column tube (2) radially to the inside and are intended to clamp the steering column tube (2) fixedly, are configured as cut edges.

2. Casing unit according to Claim 1, **characterized in that** the clamping section (6) has two contact plates (23, 24) which are arranged at an axial spacing (31) from one another and are connected to at least one connecting plate (32, 33).

3. Casing unit according to Claim 2, **characterized in that** the contact plates (23, 24) are welded to the connecting plate (32, 33).

4. Casing unit according to Claim 2 or 3, **characterized in that** the connecting plate (32, 33) encloses the steering column tube (2) in a U-shaped manner, and two end regions which lie opposite one another in each case have a through opening (8, 9) for the passage of a clamping bolt (10) of a closing apparatus (11).

5. Casing unit according to Claim 4, **characterized in that** the connecting plate (32, 33) is provided with reinforcing beads (34, 35) which are arranged at the level of the respective through opening (8, 9) and are oriented in the direction of the rotational axis (5).

6. Casing unit according to one of Claims 2 to 5, **characterized in that** the contact plates (23, 24) in each case have a radial aperture (26) which forms a gap which can be reduced in size by way of closing of the clamping section (6) by means of a closing apparatus (11), in order thus to clamp the steering column tube (2) fixedly in the central recess (25) of the respective contact plate (23, 24).

7. Casing unit according to Claim 1, **characterized in that** the contact plates (23, 24) are punched from a plate by means of precision cutting.

8. Casing unit according to Claim 1, **characterized in that** the contact faces (27, 28, 29, 30) of the contact plates (23, 24) are provided with lubricating varnish or with small sliding plates made from brass or plastic.

9. Casing unit according to one of the preceding claims, **characterized in that** it has a holding section (20) which can be connected to the vehicle and can deform elastically in the case of pivoting of the casing unit (1) .

10. Steering column for a motor vehicle, comprising a steering shaft (3) which is received in a steering column tube (2) such that it can be rotated about a rotational axis (5), the steering column tube (2) being received in a casing unit (1) according to one of Claims 1 to 9 such that it can be displaced in the direction of the rotational axis (5).

## Revendications

1. Unité d'enveloppe pour une colonne de direction réglable d'un véhicule automobile, qui peut être montée sur un châssis de véhicule, et qui est prévue pour recevoir de manière déplaçable longitudinalement un tube d'enveloppe (2) qui est prévu pour supporter un arbre de direction (3) de manière rotative autour d'un axe de rotation (5), l'unité d'enveloppe (1) présentant une portion de serrage (6) venant en prise autour du tube d'enveloppe (2), au moyen de laquelle le tube d'enveloppe (2) peut être serré fixement dans l'unité d'enveloppe (1), la portion de serrage (6) présentant au moins une plaque de contact (23, 24) avec un évidement central (25) dont le plan de plaque est disposé perpendiculairement à l'axe de rotation (5) de l'arbre de direction (3) et qui reçoit le tube d'enveloppe (2) dans son évidement central (25) de telle sorte que le tube d'enveloppe (2) puisse être serré fixement dans la plaque de contact (23, 24), **caractérisée en ce que** l'évidement central (25) d'une plaque de contact (23, 24) présente trois ou quatre portions en forme de segment de cercle (27, 28, 29, 30) qui sont espacées les unes des autres dans la direction périphérique et **en ce que** les surfaces de contact des portions (27, 28, 29, 30) tournées radialement vers l'intérieur vers le tube d'enveloppe (2) et prévues pour serrer fixement le tube d'enveloppe (2) sont réalisées sous forme d'arêtes de coupe.

2. Unité d'enveloppe selon la revendication 1, **caractérisée en ce que** la portion de serrage (6) présente deux plaques de contact (23, 24) qui sont disposées à une distance axiale (31) l'une de l'autre et qui sont connectées à au moins une tôle de liaison (32, 33).

3. Unité d'enveloppe selon la revendication 2, **caractérisée en ce que** les plaques de contact (23, 24) sont soudées à la tôle de liaison (32, 33).

4. Unité d'enveloppe selon la revendication 2 ou 3, **caractérisée en ce que** la tôle de liaison (32, 33) entoure en forme de U le tube d'enveloppe (2) et deux régions d'extrémité opposées présentent chacune une ouverture de passage (8, 9) pour le passage d'un boulon de serrage (10) d'un dispositif de serrage (11).

5. Unité d'enveloppe selon la revendication 4, **caractérisée en ce que** la tôle de liaison (32, 33) est pourvue de moulures de renforcement (34, 35) qui sont disposées à la hauteur de l'ouverture de passage respective (8, 9) et qui sont orientées dans la direction de l'axe de rotation (5).

6. Unité d'enveloppe selon l'une quelconque des revendications 2 à 5, **caractérisée en ce que** les plaques de contact (23, 24) présentent chacune une interruption radiale (26) qui forme une fente qui peut être réduite par serrage de la portion de serrage (6) au moyen d'un dispositif de serrage (11) de manière à serrer fixement le tube d'enveloppe (2) dans l'évidement central (25) de la plaque de contact respective (23, 24).

7. Unité d'enveloppe selon la revendication 1, **caractérisée en ce que** les plaques de contact (23, 24) sont estampées au moyen d'un découpage fin dans une platine.

8. Unité d'enveloppe selon la revendication 1, **caractérisée en ce que** les surfaces de contact (27, 28, 29, 30) des plaques de contact (23, 24) sont pourvues d'un vernis antifriction ou de lamelles antifriction en laiton ou en plastique.

9. Unité d'enveloppe selon l'une quelconque des revendications précédentes, **caractérisée en ce qu'**elle présente une portion de retenue (20) qui peut être connectée au véhicule et qui peut se déformer élastiquement dans le cas d'un pivotement de l'unité d'enveloppe (1).

10. Colonne de direction pour un véhicule automobile comprenant un arbre de direction (3) qui est reçu dans un tube d'enveloppe (2) de manière rotative autour d'un axe de rotation (5), le tube d'enveloppe (2) étant reçu dans une unité d'enveloppe (1) selon l'une quelconque des revendications 1 à 9 de manière déplaçable dans la direction de l'axe de rotation (5) .
